Europäisches Patentamt

European Patent Office

Office européen des brevets

(11) Veröffentlichungsnummer: **0 242 563 B1**

(12) **EUROPÄISCHE PATENTSCHRIFT**

(45) Veröffentlichungstag der Patentschrift: **27.12.91**

(51) Int. Cl.5: **H04M 3/18, H04M 3/00**

(21) Anmeldenummer: **87103429.4**

(22) Anmeldetag: **10.03.87**

(54) Schutzschaltung für den Überspannungsschutz einer Teilnehmeranschlussschaltung.

(30) Priorität: **23.04.86 DE 3613721**

(43) Veröffentlichungstag der Anmeldung:
**28.10.87 Patentblatt 87/44**

(45) Bekanntmachung des Hinweises auf die
Patenterteilung:
**27.12.91 Patentblatt 91/52**

(84) Benannte Vertragsstaaten:
**AT BE CH DE FR GB IT LI LU NL SE**

(56) Entgegenhaltungen:
**WO-A-82/02287**
**DE-A- 2 034 392**
**DE-A- 3 304 436**
**US-A- 4 377 832**

**IEEE JOURNAL OF SOLID-STATE CIRCUITS,
Band SC-19, Nr. 3, Juni 1984, Seiten 406-413,
New York, US; G. REMMERIE et al.: "10 omega 370 V high voltage switches for line circuit application"**

(73) Patentinhaber: **SIEMENS AKTIENGESELL-
SCHAFT
Wittelsbacherplatz 2
W-8000 München 2(DE)**

(72) Erfinder: **Lechner, Robert, Dipl.-Ing.
Haidfeldstrasse 5
W-8156 Otterfing(DE)**
Erfinder: **Rudolf, Hans-Werner, Dr.rer.nat.
Wörthstrasse 13
W-8000 München 80(DE)**
Erfinder: **Krimmer, Roland, Dipl.-Ing.
Johann Clanze Strasse 89
W-8000 München 70(DE)**

Rank Xerox (UK) Business Services

## Beschreibung

Die Erfindung betrifft eine Schutzschaltung für den Überspannungsschutz einer Teilnehmeranschlußschaltung eines digitalen Zeitmultiplex-Fernmeldenetzes, insbesondere Fernsprechnetzes, die eine elektronische Schnittstellenschaltung enthält, sowie für den Überspannungsschutz der der Teilnehmeranschlußschaltung zugeordneten elektronischen Schalter für den Testzugriff, durch die für jede Ader der angeschlossenen Anschlußleitung bzw. jeden entsprechenden Anschluß der Teilnehmeranschlußschaltung gesondert eine Trennung der Leitungsadern von der Teilnehmeranschlußschaltung vorgenommen und ein separater Testzugriff zu den Leitungsadern und/oder zu den entsprechenden Anschlüssen der Teilnehmeranschlußschaltung wirksam geschaltet werden kann. Siehe hierzu auch DE-A-3 304 436.

Die Notwendigkeit einer solchen Schutzschaltung entsteht durch den Umstand, daß die Schnittstellenschaltung der Teilnehmeranschlußschaltung unter Verwendung elektronischer Schaltelemente aufgebaut ist und daß die Schalter für den Testzugriff elektronische Schalter sind. Bisherige Teilnehmeranschlußschaltungen, bei denen die Schnittstellenschaltung Übertrager und spannungsfeste Widerstände aufweist und bei denen der Testzugriff über elektromechanische Relais erfolgt, können kurzzeitige Überspannungen bis in die Größenordnung von 1 kV ohne Schaden aushalten, so daß sich dort eine Schutzschaltung erübrigt.

An eine solche Schutzschaltung ist die Forderung zu stellen, daß sie die Widerstandssymmetrie auf den Adern der Teilnehmeranschlußleitung nicht beeinträchtigt. Es muß ferner gewährleistet sein, daß im Falle einer auf eine Störung zurückzuführenden Stromunterbrechung des Stroms auf der Teilnehmeranschlußleitung feststellbar sein muß, ob diese auf einen Defekt der Teilnehmeranschlußleitung selbst oder auf einen Defekt der Schutzschaltung zurückzuführen ist. Darüber hinaus soll die Schutzschaltung mit möglichst geringem Kosten aufwand realisierbar sein.

Erfindungsgemäß wird diese Aufgabe mit einer Schutzschaltung der eingangs genannten Art gelöst, die erfindungsgemäß gekennzeichnet ist durch ein je Leitungsader der Teilnehmeranschlußleitung vorgesehenes und zwischen der Leitungsseite des genannten Trennungsschalters und des Zugriffsschalters für den Zugriff auf die Leitungsader angeschlossenes Schwellwertglied identischen Aufbaus wie das zur jeweils anderen Leitungsader gehörende Schwellwertglied, durch das Überspannungen auf einen Erdpotential führenden Schaltungspunkt abgeleitet werden, sowie durch ein jeden Zugriffsschalter für den Zugriff zu den Leitungsadern überbrückendes zweites Schwellwertglied, das über ein drittes Schwellwertglied mit dem Erdpotential führenden Schaltungspunkt verbindbar ist.

Bei der erfindungsgemäßen Schaltungsanordnung ist das in erster Linie den Schutz bewirkende Schwellwertglied, das in der Praxis aus einem in die Leitungsader eingefügten relativ niederchmigen Widerstand und einem zwischen einem Anschluß dieses Widerstandes und einem Erdpotential führenden Schaltungspunkt liegenden Thyristordiode realisiert ist, so angeordnet, daß dann, wenn der genannte Widerstand, der gegebenenfalls auch als Sicherungswiderstand ausgebildet sein kann, durchgebrannt ist, mit Hilfe des Testzugriffs für die Überprüfung der Teilnehmeranschlußleitung erkannt werden kann, daß eine Stromunterbrechung auf der Teilnehmeranschlußleitung die Folge der Unterbrechung dieses Widerstandes und nicht etwa einer Unterbrechung der Teilnehmeranschlußleitung selbst oder eines Kurzschlusses der Adern der Teilnehmeranschlußleitung ist.Aufgrund identischen Aufbaus und identischer Anschaltweise sind symmetrische Verhältnisse gewährleistet.
Weitere Schutzelemente stellen dabei sicher, daß auch der Zugriffsschalter für den Test der Teilnehmeranschlußleitung gegen Überspannungen geschützt ist, obwohl er von der Schutzwirkug des ersten Schwellwertgliedes nicht erfaßt wird.

Gemäß einer weiteren Ausgestaltung der Erfindung ist im Hinblick auf eine Kosteneinsparung das dritte Schwellwertglied für mehrere Teilnehmneranschlußschaltungen gemeinsam vorgesehen.

Als die Ansprechschwelle des Schwellwertgliedes bestimmendes Element wird, wie angedeutet, vorzugsweise eine Thyristordiode eingesetzt.

Gemäß einer weiteren Ausgestaltung der Erfindung ist an die Anschlüsse der Teilnehmeranschlußschaltung jeweils auf der Teilnehmeranschlußschaltungsseite des betreffenden Zugriffsschalters für den Zugriff zur Teilnehmeranschlußschaltung ein weiteres Schwellwertglied angeschlossen, dessen Ansprechschwell unterhalb der Ansprechschwelle der übrigen Schwellwertglieder liegt.

Hierdurch kann Berücksichtigung finden, daß aus bestimmten Gründen die Ansprechschwelle der eigentlichen Schutzschaltung nicht so niedrig gelegt werden kann, daß sie in jedem Falle eine Zerstörung der Elemente der Schnittstellenschaltung verhindern kann. Eine dieser Gründe liegt darin, daß die Rufwechselspannung, die auf die Teilnehmeranschlußleitung gegeben wird, unter Umständen mit beträchtlicher Amplitude auftritt. Es muß daher die Ansprechschwelle der Schutzschaltung und dementsprechend die Spannungsfestigkeit der Zugriffsschalter so groß sein, daß einerseits die Schutzschaltung nicht anspricht, andererseits keine Zerstörung der Zugriffsschalter zu befürchten ist, wogegen an die Schaltelemente der Schnittstellenschaltung im Hinblick darauf keine besonderen Anforderungen zu stellen sind, da in der Rufphase die Schnittstellenschaltung von der Teilnehmeranschlußschaltung abgetrennt und so mit von der Rufspannung nicht beeinflußbar ist.

Der sogenannte Feinschutz, der durch die erwähnten weiteren Schwellwertglieder erzielbar ist, kann gemäß noch einer weiteren Ausgestaltung der Erfindung dadurch ergänzt sein, daß die im Hinblick auf Tests vorgesehenen vorgenannten Trennungsschalter durch elektronische Bauelemente realisiert sind, die im Durchlaßzustand einen für eine Strombegrenzung relevanten Durchlaßwiderstand aufweisen.

Nachstehend wird die Erfindung anhand eines Ausführungsbeispiels unter Bezugnahme auf eine Zeichnung näher erläutert.

In der Zeichnung zeigen:

FIG 1 ein Schaltbild, das die Anordnung der erwähnten Testschalter in Relation zu einer Teilnehmeranschlußleitung und der betreffenden Teilnehmeranschlußschaltung ohne Schutzschaltung darstellt.

FIG 2 die erfindungsgemäße Schutzschaltung, soweit sie eine Ader der Teilnehmeranschlußschaltung bzw. einen Eingang der Teilnehmeranschlußschaltung betrifft.

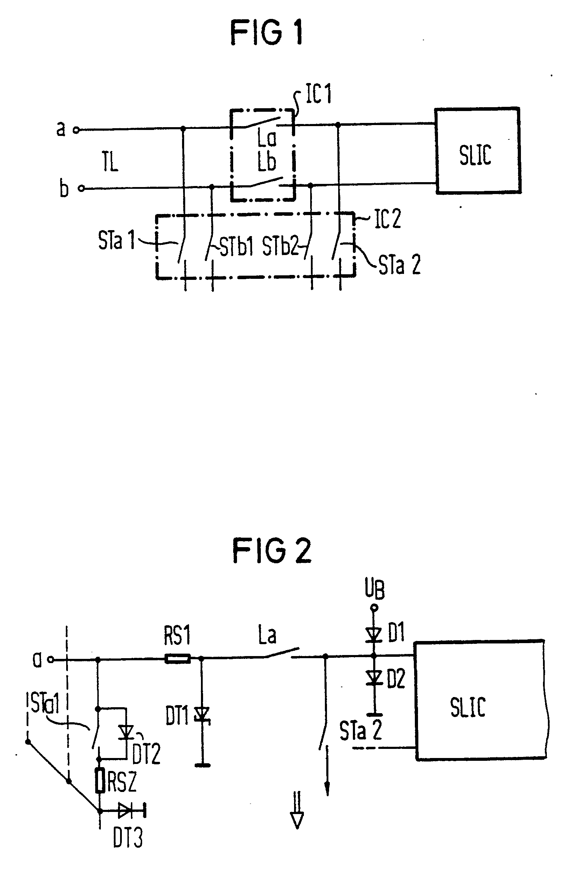

In der FIG 1 ist mit SLIC eine Teilnehmeranschlußschaltung angedeutet, die dem Anschluß einer Teilnehmeranschlußleitung TL mit den Adern a und b dient.

Im Zusammenhang mit dem Testzugriff zu der Teilnehmeranschlußleitung und/oder der Teilnehmeranschlußschaltung SLIC sind Testzugriffsschalter STa1, STa2 und STb1, STb2 sowie Längsschalter La und Lb vorgesehen. Mit Hilfe der Längsschalter La und Lb können die Adern a und b der Teilnehmneranschlußleitung TL separat oder gemeinsam von den Anschlüssen der Teilnehmeranschlußschaltung SLIC abgetrennt werden.

Die Testzugriffsschalter STa1 und STb1 sind auf der Leitungsseite der Längsschalter La und Lb an die Adern a und b der Teilnehmeranschlußleitung angeschlossen und führen zu hier nicht dargestellten Einrichtungen zur Durchführung des Leitungstests. Die Testzugriffsschalter STa2 und STb2 sind auf der der Teilnehmeranschlußschaltung zugekehrten Seite der Längsschalter La und Lb an die Adern der Teilnehmeranschlußschaltung angeschlossen und führen ebenfalls zu den erwähnten Testeinrichtungen.

Die erwähnten Schalter können in beliebiger Kombination betätigt werden. Bei geöffneten Längsschaltern La und Lb ist es möglich, über die Zugriffsschalter getrennt die Teilnehmeranschlußleitung mit dem daran angeschlossenen Teilnehmerendgerät einerseits und andererseits die Teilnehmeranschlußschaltung zu prüfen.

Bei den erwähnten Schaltern handelt es sich um elektronische Schalter, die beispielsweise als MOS-Transistorpaar ausgebildet sein können, wobei die Transistoren gegeneinander geschaltet sind, um Ströme beider Polaritäten zu sperren, sie können aber auch als Triac-Schalter bzw. als Kombinationen von Triac-Schaltern und MOS-Transistoren ausgebildet sein.

Die hier nur als Schaltungsblock dargestellte Teilnehmeranschlußschaltung SLIC enthält u.a. eine elektronische Schnittstellenschaltung, in der elektronische Schaltelemente die Funktion von Übertragern und Widerständen übernehmen, wie sie an entsprechender Stelle bei konventionellen Teilnehmeranschlußschaltungen vorgesehen sind.

Sowohl die Schaltelemente der Schnittstellenschaltung als auch die im Zusammenhang mit dem Test benötigten elektronischen Schalter sind durch äußere elektrische Beeinflussungen, die beispielsweise durch Blitzschlag oder durch Netzberührung über die Teilnehmeranschlußleitung an sie gelangen, gefährdet und erfordern daher einen Überspannungsschutz, wobei die vorstehend aufgeführten Bedingungen zu erfüllen sind.

Die FIG 2 zeigt nun den auf eine Leitungsader der Teilnehmeranschlußleitung bzw. auf einen betreffenden Anschluß der Teilnehmeranschlußschaltung bezogenen Teil der erfindungsgemäßen Schutzschaltung. Zu diesem Teil der Schutzschaltung gehört ein relativ niederohmiger Widerstand RS1 von beispielsweise 50 Ohm, der zwischen dem Anschluß des Festzugriffsschalters STa1 und dem Längsschalter La in die Ader a der Teilnehmeranschlußleitung eingefügt ist, sowie als schwellwertbehaftetes Schaltelement eine Thyristordiode DT1,(Vierschichtdiode) die zwischen dem der Teilnehmeranschlußschaltung SLIC zugewandten Anschluß des Widerstandes RS1 und einem Erdpotential führenden Schaltungspunkt angeschaltet ist. Anstelle der Thyristordiode kann auch ein Thyristor vorgesehen sein, dessen Durchbruchspannung durch Einstellen eines Steuerstroms den Bedürfnissen entsprechend festgelegt ist.

Zur Schutzschaltung gehören ferner eine weitere Thyristordiode DT2, die die Schaltstrecke des Zugriffsschalters STa1 überbrückt, sowie ein zu dieser Schaltstrecke in Reihe liegender niederohmiger Widerstand RS2. Schließlich ist als weiterer Bestandteil der Schutzschaltung eine dritte Thyristordiode DT3 vorgesehen, die zwischen dem im Schalter STa1 abgewandten Anschluß des Widerstandes RS2 und einem Erdpotential führenden Schaltungspunkt eingeschaltet ist. Die Diode DT3 kann einer Mehrzahl von Teilnehmeranschlußleitungen zugeordnet sein.

Der aus dem Widerstand RS1 und der Thyristordiode DTI bestehende Teil der erfindungsgemä-

ßen Schutzschaltung schützt den Längsschalter La, den Zugriffsschalter STa2, sowie die elektronische Schnittstellenschaltung der Teilnehmeranschlußschaltung SLIC gegen Überspannungen, indem die Thyristordiode DT1, die normalerweise ihren hochohmigen Zustand einnimmt beim Auftreten solcher Überspannungen, in den niederohmigen Zustand übergeht und damit die Überspannungen gegen Erdpotential ableitet.

Aufgrund ihrer spezifischen Anschaltung, nämlich zwischen dem Zugriffsschalter STa1 und dem Längsschalter La besteht die Möglichkeit zu überprüfen, ob eine Unterbrechung des Stromes auf der Teilnehmeranschlußleitung die Folge eines Defekts der Leitung selbst oder aber einer Zerstörung des Widerstandes RS1 ist. Dies ist insofern von Interesse, als in der Praxis die Schutzschaltung und damit auch der Widerstand RS1 zusammen mit der Teilnehmeranschlußschaltung SLIC auf einer steckbaren Baugruppe angeordnet ist, so da dann wenn die festgestellte Leitungsstromunterbrechung auf eine Zerstörung des Widerstandes RS1 zurückzuführen ist, zur Beseitigung dieses Defekts lediglich ein Austausch dieser Steckbaugruppe zu erfolgen hat.

Eine solche Prüfung erfolgt durch einen Testzugriff über den Zugriffsschalter Sta1.

Die Möglichkeit einer derartigen Prüfung wird dadurch erkauft, daß der Zugriffsschalter STa1 von der Schutzwirkung der Thyristordiode DT1 nicht erfaßt ist, weswegen die erfindungsgemäße Schutzschaltung die erwähnten weiteren Teile in Form der Thyristordioden DT2, DT3 und des Widerstandes RS2 aufweisen. Auf diese Schaltelemente bildet im Falle des Auftretens von Überspannungen einen niederohmigen Ableitpfad nach einem Erdpotential führenden Schaltungspunkt, durch den der Zugriffsschalter STa1 überbrückt wird und damit geschützt ist.

Je nach Art der Einspeisung der Rufsignalspannung kann es erforderlich sein, die Ansprechschwelle der Schutzschaltung so hoch zu legen, daß Spannungen an die elektronischen Schalter und an die Schnittstellenschaltung gelangen können, die deren Spannungsfestigkeit übersteigen. Im Hinblick auf die Rufsignalspannungen müssen die Testschalter eine entsprechend erhöhte Spannungsfestigkeit aufweisen, die elektronischen Schaltelemente der Schnittstellen schaltung sind hingegen durch die Rufwechselspannungen nicht gefährdet, da im Betriebszustand "Ruf" die Teilnehmeranschlußschaltung von der Einspeisestelle für die Rufwechsel-spannungen abgetrennt ist. Damit jedoch Spannungen mit Amplituden, die über der für die Bauelemente der Schnittstellenschaltung tolerierbaren Grenze jedoch noch unterhalb der Ansprechschwelle der Schutzschaltung liegen, die Bauelemente der Schnittstellenschaltung nicht zerstören können, ist gemäß weiterer Ausgestaltung der Erfindung zum Feinschutz der Schnittstellenschaltung der Teilnehmeranschlußschaltung zwischen dem Zugriffsschalter STa2 und dem Eingang der Schnittstellenschaltung ein weiteres Schwellwertglied in Form von zwei Dioden D1 und D2 vorgesehen, von denen die Diode D1 zwischen einem auf Speisespannungspotential liegenden Schaltungspunkt und dem Eingang der Teilnehmeranschlußschaltung und die andere zwischen diesem Eingang und einem Erdpotential führenden Schaltungspunkt angeschlossen ist. Die Ansprechschwelle dieses Schwellwertgliedes ist entsprechend niedriger als diejenige der Schutzschaltung. Dieser Feinschutz kann durch Verwendung eines Schaltelementes zur Realisierung des Längsschalters La ergänzt sein, der im Durchlaßzustand einen für eine Strombegrenzung relevanten Widerstand aufweist.

**Patentansprüche**

1. Schutzschaltung für den Überspannungsschutz einer Teilnehmeranschlußschaltung eines digitalen Zeitmultiplex-Fernmeldenetzes, insbesondere Fernsprechnetzes, die eine elektronische Schnittstellenschaltung enthält, sowie für den Überspannungsschutz der der Teilnehmeranschlußschaltung zugeordneten elektronischen Schalter für den Testzugriff, durch die für jede Ader der angeschlossenen Teilnehmeranschlußleitung bzw. jeden entsprechenden Anschluß der Teilnehmeranschlußschaltung gesondert eine Trennung der Leitungsadern von der Teilnehmeranschlußschaltung vorgenommen und ein separater Testzugriff zu den Leitungsadern und/oder zu den entsprechenden Anschlüssen der Teilnehmeranschlußschaltung wirksam geschaltet werden kann, gekennzeichnet durch ein je Leitungsader (a, b) der Teilnehmeranschlußleitung vorgesehenes und zwischen der Leitungsseite des genannten Trennungsschalters (La, Lb) und dem Zugriffsschalter (STa1, STb1) für den Zugriff auf die Leitungsader (a, b) angeschlossenes Schwellwertglied (RS1/DT1) identischen Aufbaus wie das zur jeweils anderen Leitungsader gehörende Schwellwertglied, durch das Überspannungen auf einen Erdpotential führenden Schaltungspunkt abgeleitet werden, sowie durch ein jeden Zugriffsschalter (STa1, STb1) zu den Leitungsadern (a, b) überbrückendes zweites Schwellwertglied (DT2/RS2), das über ein drittes Schwellwertglied (DT3) mit dem Erdpotential führenden Schaltungspunkt verbindbar ist.

2. Schaltung nach Anspruch 1,

**dadurch gekennzeichnet,**
daß das dritte Schwellwertglied (DT3) für mehrere Teilnehmer Anschlußschaltungen mit zugeordneten Zugriffsschaltern gemeinsam vorgesehen ist.

3. Schaltung nach Anspruch 1 oder 2,
   **dadurch gekennzeichnet,**
   daß das die Ansprechschwelle bestimmende Element der Schwellglieder eine Thyristordiode (DT1, DT2, DT3) ist.

4. Schaltung nach einem der vorhergehenden Ansprüche,
   **dadurch gekennzeichnet,**
   daß an die Anschlüsse der Teilnehmeranschlußschaltung jeweils auf der Teilnehmeranschlußschaltungsseite des betreffenden Zugriffsschalters (STa2, STb2) für den Zugriff zur Teilnehmeranschlußschaltung ein weiteres Schwellwertglied (D1, D2) angeschlossen ist, dessen Ansprechschwelle unterhalb der Ansprechschwelle der übrigen Schwellwertglieder liegt.

5. Schaltungs nach Anspruch 4,
   **dadurch gekennzeichnet,**
   daß als Trennungsschalter (La, Lb) elektronische Bauelemente verwendet werden, die im Durchlaßzustand einen für eine Strombegrenzung relevanten Durchlaßwiderstand aufweisen.

## Claims

1. Protection circuit for the overvoltage protection of a subscriber circuit of a digital time-division multiplex telecommunications network, preferably a telephone network, which circuit contains an electronic interface circuit, and for the overvoltage protection of the electronic switches, allocated to the subscriber circuit, for test access, by means of which the line wires can be isolated from the subscriber circuit, separately for each wire of the connected subscriber line and each corresponding subscriber circuit terminal and a separate test access can effectively be connected to the line wires and/or to the corresponding subscriber circuit terminals, characterised by a threshold element (RS1/DT1), provided for each line wire (a, b) of the subscriber line and connected between the line side of the said isolation switch (La, Lb) and the access switch (STa1, STb1) for access to the line wire (a, b), of identical construction to the threshold element associated, in each case, with the other line wire, by means of which overvoltages are diverted to a circuit point at earth potential, and by a second threshold element (DT2/RS2), bypassing each access switch (STa1, STb1) to the line wires (a, b), which can be connected via a third threshold element (DT3) to the circuit point at earth potential.

2. Circuit according to Claim 1, characterised in that the third threshold element (DT3) is provided for a plurality of subscriber circuits having common associated access switches.

3. Circuit according to Claim 1 or 2, characterised in that the element of the threshold elements determining the trigger threshold is a thyristor diode (DT1, DT2, DT3).

4. Circuit according to one of the preceding claims, characterised in that a further threshold element (D1, D2), the trigger threshold of which is lower than the trigger threshold of the other threshold elements, is connected to the terminals of the subscriber circuit, in each case on the subscriber circuit side of the associated access switch (STa2, STb2) for access to the subscriber circuit.

5. Circuit according to Claim 4, characterised in that electronic components having a forward resistance, in the switched-on state, relevant for current limitation are used as isolation switches (La, Lb).

## Revendications

1. Circuit de protection servant à protéger contre les surtensions un circuit de raccordement d'abonné d'un réseau numérique de télécommunications à multiplexage temporel, notamment d'un réseau téléphonique, qui comporte un circuit d'interface électronique, ainsi que pour assurer la protection contre les surtensions les interrupteurs électroniques associés au circuit de raccordement d'abonné, pour réaliser l'accès en vue d'un test, au moyen duquel une séparation des conducteurs de la ligne d'abonné par rapport au circuit de raccordement d'abonné est exécutée séparément pour chaque conducteur de la ligne d'abonné raccordée et pour chaque borne correspondante du circuit de raccordement d'abonné, et un accès de test séparé aux conducteurs de la ligne et/ou aux bornes correspondantes du circuit de raccordement d'abonné peut être activé,
caractérisé par un circuit à valeur de seuil (RS1/DT1) prévu pour chaque conducteur (a,b) de la ligne d'abonné et branché entre le côté ligne dudit interrupteur de séparation (La,Lb) et l'interrupteur d'accès (STa1, STb1) permettant l'accès aux conducteurs (a,b) de la ligne, ces circuits à valeurs de seuil possédant la même constitution que le circuit à valeur de seuil faisant partie respectivement de l'autre conducteur de la ligne, et au moyen duquel des surtensions sont dérivées en direction d'un point du circuit placé au potentiel de terre, ainsi que par un second circuit à valeur de seuil (DT2/RS2), qui shunte chaque interrupteur d'accès (STa1, STb1) de raccordement aux conducteurs de lignes (a,b) et peut être raccordé au moyen d'un troisième circuit à valeur de seuil (DT3) au point du circuit raccordé au potentiel de terre.

2. Circuit suivant la revendication 1, caractérisé par le fait que le troisième circuit à valeur de seuil (DT3) est prévu en commun pour plusieurs circuits de raccordement d'abonnés auxquels sont associés des interrupteurs d'accès.

3. Circuit suivant la revendication 1 ou 2, caractérisé par le fait que l'élément qui détermine le seuil de réponse et le circuit à valeur de seuil, est une diodethyristor (GT1,GT2,GT3).

4. Circuit suivant l'une de revendications précédentes, caractérisé par le fait qu'aux bornes du circuit de raccordement d'abonné est raccordé, respectivement sur le côté circuit de raccordement d'abonné de l'interrupteur d'accès considéré (STa2, STb2), pour l'accès au circuit de raccordement d'abonné, un autre circuit à valeur de seuil (D1,D2), dont le seuil de réponse est inférieur au seuil de réponse des autres circuits à valeurs de seuil.

5. Circuit suivant la revendication 4, caractérisé par le fait qu'on utilise, comme interrupteurs de séparation (La, Lb), des composants électroniques qui possèdent, à l'état passant, une résistance à l'état passant importante pour une limitation du courant.

# FIG 1

# FIG 2